# EUROPEAN PATENT APPLICATION

(11) **EP 1 122 569 A1**
(43) Date of publication of application: **08.08.2001**
(21) Application number: 00102079.1
(22) Date of filing: 02.02.2000
(51) Int. Cl.: G02B 6/44

(54) **Quad cable**

(71) Applicant: W.L. GORE & ASSOCIATES GmbH, 85640 Putzbrunn (DE)
(72) Inventor: Booth, David, 91785 Pleinfeld (DE)
(74) Representative: Harrison, Robert John

(57) **Abstract**

The invention relates to a cable (10) having an elongate core (20) made of a first dielectric material and having a core outer surface (25); and a plurality of elongate conducting elements (30) arranged about the elongate core (20). The elongate conducting elements (30) have an inner conductor (40) surrounded by an insulating layer (50) which is made of a second dielectric material. The outer surface of the inner conductor (40) os divided into a first outer surface area (60) and a second outer surface area (70) and the first outer surface area (60) is attached, for example by sintering, to the core outer surface (25). The first and second dielectric materials are preferably expanded PTFE. The cable (10) finds application in a streamer (100) for use in seismographic surveys of the ocean bottom sub surface.

## Description

### FIELD OF THE INVENTION

The invention relates to a cable having a core to which are attached a plurality of elongate conducting elements. In particular four conducting elements are used to form a quad cable.

### BACKGROUND OF THE INVENTION

Quad cables are known in the art, for example US-A-5 521 333 (Kobayawshi et al.) assigned to Sumitomo Electric Industries, Ltd., teaches a transmission cable including four insulated electric wires with a low dielectric central interposition member or elongate core. In the quad cable of this patent the elongate core is preferably made of polyethylene. The insulation of the insulated electric wires are also preferably made from polyethylene. A jacket of polyvinylchloride is disposed about the insulated wires. The insulated electric wires of this patent are held in place about the elongate core by means of polyester tape wound about the wires.

Quad cables incorporating an elongate core or filler made from expanded polytetrafluoroethylene are known from US-A-5 574 250 (Hardie et al.) assigned to W.L.Gore & Associates. In this patent, the four insulated electric wires are held in position by a spacer layer.

A further quad cable is known from DE-A-31 04 429 (Fröscher) assigned to Siemens in which two signal conductors and two earth wires are disposed about a central core made of a dielectric material. This application does not disclose the means by which the signal conductors or earth wires are held in place about the core.

The use of electrical cables in marine environments is known to be problematic since there is a risk that water may penetrate into the cable in the event of a cut or breach in the outer jacket. The most common method of protecting the cable in the art involves the use of flooding materials to fill the interstices of the cable. Such flooding materials include synthetic polymers and petroleum greases. One known disadvantage of the use of these materials is that the dielectric constant of the cable is changed by the addition of these materials in the cable. Furthermore, as the conductors move within the cable, the relative position of the interstices move which affects the electrical properties of the cable. It has been particularly difficult in the past to provide water blocking quad cables since additional handling and processing steps are required which are both messy and inefficient.

US-A-5 949 018 ( Esker) assigned to CommScope, Inc., teaches a water blocked cable construction which provides one way of solving this problem. In this patent, a water swellable flooding material is taught which is placed between two metal braided shields. The material used is a hydrogel polymer which is solid when dry but swells up and becomes gel-like on immersion in water.

US-A-5 734 126 (Siekierka et al.) assigned to Belden Wire & Cable Company teaches a twisted pair cable which is suitable for high frequency signal transmission. The cable has two solid, stranded or hollow conductor wires which are surrounded respectively by a cylindrical dielectric insulation layer. Each of the conductors is disposed centrally within and thus substantially concentric with the corresponding insulation. The insulated conductors are joined or bonded together along their entire length by an appropriate adhesive. Alternatively, the adjacent dielectric insulation layers can be bonded together by causing material contact while the dielectrics are at elevated temperature and then cooling to provide a joined cable having no adhesive.

Similarly US-A-5 382 390 (Hubis et al.) assigned to W.L.Gore & Associates, Inc., teaches a twisted pair in which the dielectric insulators of the insulated conductors are bonded together by heating. Neither the Siekerka nor the Hubis patent make reference, however, to quad cables. Indeed their teachings are not applicable since it is necessary in a quad cable to maintain a fixed spatial relationship between the individual conductors, e.g. by use of a central spacing member or core, and this is not possible to implement using the teachings of these two patents.

### SUMMARY OF THE INVENTION

It is the object of the invention to provide an improved quad cable.

It is furthermore an object of the invention to ensure that the individual conductors of a quad cable maintain a substantially fixed spatial relationship to each other throughout the length of the cable.

It is furthermore an object of the invention to improve the flexibility of the cable whilst maintaining its electrical properties.

It is yet a further object of the invention to provide a multi-conductor cable for use in a fluid environment such as a marine environment or in oil fields.

These and other objects of the invention are solved by providing a cable comprising an elongate core made of a first dielectric material with a core outer surface. Four or more (a plurality of) elongate conducting elements are disposed about the elongate core. Each of the elongate conducting elements has an inner conductor which is surrounded by an insulating layer made of a second dielectric material. The outer surface of the insulating layer of the elongate conducting elements is divided into a first outer surface area and a second outer surface area. The first outer surface area of the elongate conducting elements is attached to the core outer surface.

The use of the core in the cable provides a spacer in the centre of the cable about which the elongate conducting elements can be arranged. In the case of the quad cable four elongate conducting elements are provided. The outer surface of the insulators of the elongate conducting elements are attached to the outer surface of the core so that they elongate elements remain in a fixed position even when the cable is flexed. Thus the electrical properties of the cable, e.g. attenuation or characteristic impedance, remain substantially unchanged during flexing since the distance between the inner conductors of each of the elongate conducting elements remains substantially unchanged.

In one advantageous body of the invention, the second outer surface area of each of the elongate conducting elements is exposed to the environment, i.e. the cable is not provided with an outer jacket about the elongate conducting elements. Such a construction is particularly advantageous in environments in which a fluid, such as sea water or oil, could leak underneath the jacket and thus between the jacket and the elongate conducting elements. The fluid will locally alter the dielectric constant of the cable and thus affect the electrical properties of the cable.

Both the first and second dielectric materials are advantageously selected from the group of polymers consisting of polyethylene, polyester, perfluoralkoxy, fluoroethylene-propylene, polypropylene, polymethylpentene, full density polytetrafluoroethylene or expanded polytetrafluoroethylene. Most preferably expanded polytetrafluoroethylene is used for both dielectric materials since this material has a low dielectric constant and can be bonded to each other by sintering.

In one embodiment of the cable the insulating layer comprises a plurality of insulating layers with different dielectric constants, for example an inner one of the plurality of insulating layers is made of expanded PTFE and an outer one of the plurality of insulating layers is made of full density PTFE. This has the advantage that the effective dielectric constant of the elongate conducting elements and thus of the cable can be tailored to the required value.

The invention also provides for a method for the construction of a cable comprising the following steps:
- providing an elongate core made of a first dielectric material,
   ― disposing about the elongate core a plurality of elongate conducting elements having an insulating layer made of a second dielectric material,
- attaching the plurality of elongate conducting elements to the elongate core.

In this method the step of attaching the plurality of elongate conducting elements to the elongate core is carried out by heat treatment and preferably by sintering since this provides, with the correct choice of materials, an extremely strong bond between the plurality of elongate conducting elements and the elongate core.

The sintering can be carried out in a salt bath or in an oven at a temperature between 320°C and 420°C and preferably of approximately 390°C.

The cable of the invention can be incorporated in a streamer for use in seismic surveys. Such streamers need to be flushable, i.e. the oil within the streamer can be flushed out of the interior of the streamer if required. Since - as explained above - there are no interstices between the conducting elements in which the oil remains trapped and thus locally affects the dielectric constant, the electrical properties of the signal carrying cable are greatly improved.

### BRIEF DESCRIPTION OF THE DRAWINGS

- Fig. 1: shows a quad cable without jacket according to the invention.
- Fig. 2: shows a quad cable with jacket according to the invention.
- Fig. 3: shows a manufacturing apparatus for this invention.
- Fig. 4: shows a streamer incorporating a quad cable of the invention.
- Fig. 5: shows a further embodiment of a quad cable with a jacket.

### DETAILED DESCRIPTION OF THE INVENTION

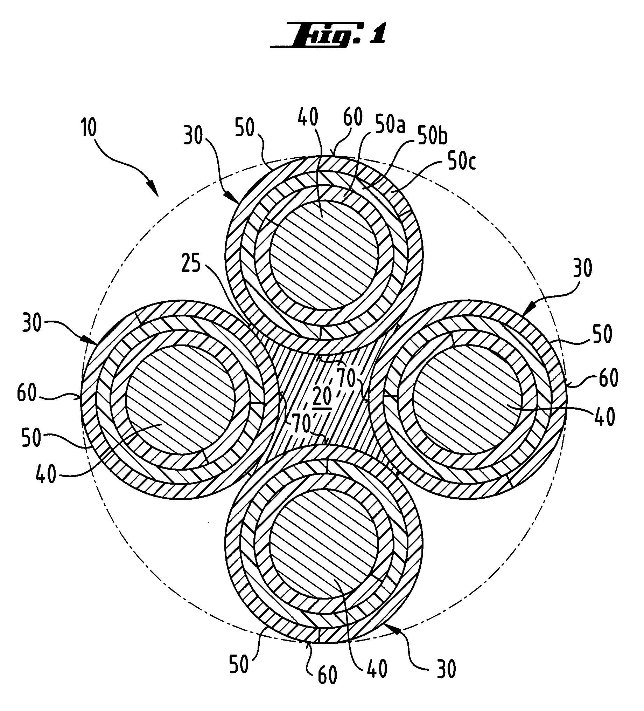

A quad cable 10 comprising found elongate conducting elements 30 disposed about an elongate core 20 is shown in Fig. 1. The elongate core 20 is made of a dielectric material such as polyethylene, polyester, perfluoralkoxy, fluoroethylene-propylene, polypropylene, polymethylpentene, full density polytetrafluoroethylene or expanded polytetrafluoroethylene. Preferably expanded polytetrafluoroethylene such as that described in US-A-3 953 556, US-A-4 187 390 or US-A-4 443 657 is used for the elongate core. The elongate core 20 has a core outer surface 25.

The elongate elements 30 are made of an inner conductor 40 of AWG size, for example, 20 or 22 surrounded by an insulating layer 50. The inner conductor 40 can be made from any conducting material such as copper, nickel-plated copper, tin-plated copper, silver-plated copper, tin-plated alloys, silver-plated alloys or copper alloys. Alternatively the inner conductor could be an optical fibre surrounded by a cladding layer. The insulating layer 50 is made of a dielectric material such as polyethylene, polyester, perfluoralkoxy, fluoroethylene-propylene, polypropylene, polymethylpentene, full density polytetrafluoroethylene or expanded polytetrafluoroethylene. Preferably expanded polytetrafluoroethylene such as that described in US-A-3 953 556, US-A-4 187 390 or US-A-4 443 657 is used. The elongate elements 30 have an outer surface area which is divided into a first outer surface area 60 and a second outer surface area 70.

The materials from which the insulating layer 50 and the elongate core 20 are made are chosen such that the two elongate core 20 and the insulating layer 50 can be attached to each other by adhesive or direct bonding. Preferably the attachment is made by direct bonding and most preferably by sintering as will be explained below. The insulating layer 50 and the elongate core 20 are preferably made from the same material. The attachment between the insulating layer 50 and the elongate core is made at the first outer surface area 60.

The embodiment of the invention in Fig. 1 shows four elongate conducting elements 30 surrounding an elongate core 20. The four elongate conducting elements 30 are twisted about each other. The lay length, i.e. the number of twists per unit length, can vary between 19 mm and 45 mm. The principles of the invention are also applicable to a different number of elongate conducting elements 30 surrounding an elongate core 20.

The embodiment of the invention of Fig. 1 has no jacket. This embodiment is particularly useful in applications in which the presence of voids or interstices in the cable is undesirable. An example of such applications is fluid-filled environments such as the ocean or in oil wells in which fluids might potentially seep between the elongate conducting elements 30 and the jacket over some lengths of the cable to potentially create localised impedance differences which can affect the skew of the signals travelling down the cable.

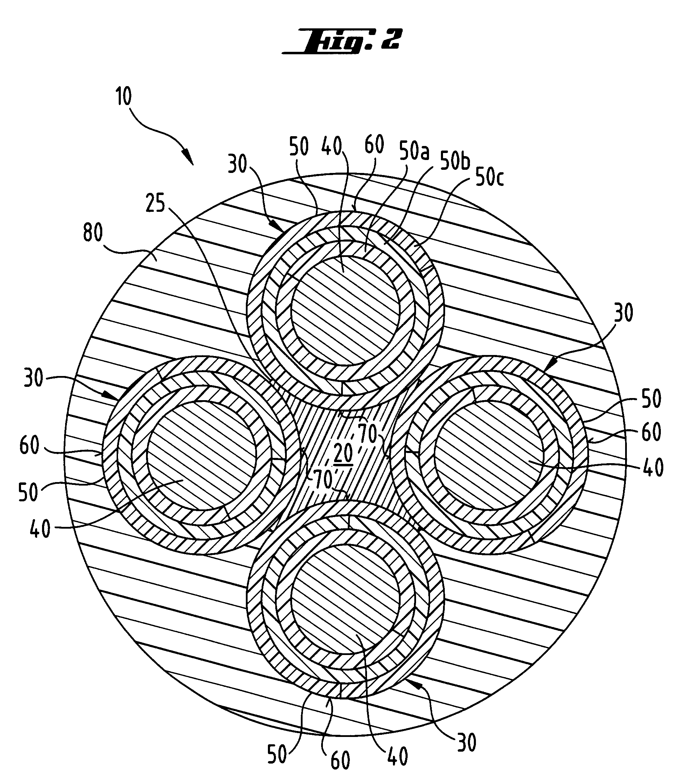

A further embodiment of the invention is depicted in Fig. 2 in which the cable 10 of the embodiment of Fig. 1 is additionally surrounded by a jacket 80. The jacket 80 can be made from polyurethane, polyethylene, polyester, perfluoralkoxy, fluoroethylene-propylene, polypropylene, polymethylpentene, full density polytetrafluoroethylene or expanded polytetrafluoroethylene. Preferably the jacket 80 is made from polyurethane extruded over the cable 10.

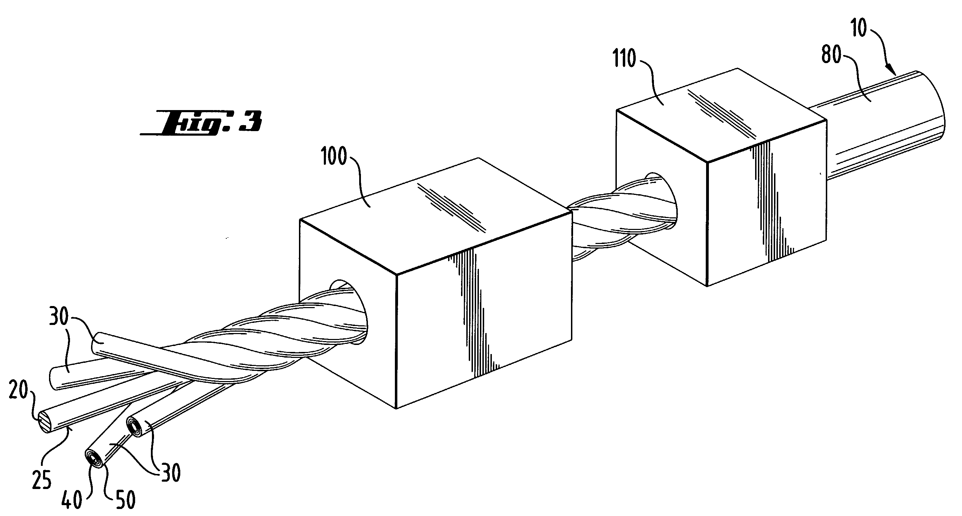

Manufacture of the cable 10 for the preferred embodiment of the invention is carried out as shown diagrammatically in Fig. 3. Four elongate conducting elements 30 comprising an insulating layer 50 of ePTFE tape-wrapped about an inner conductor 40 are twisted about an elongate core 20 of ePTFE. The elongate conducting elements 30 about the elongate core 20 are passed into a sintering oven 100 which is at a temperature between 320°C and 420°C. To sinter ePTFE a temperature of around 390°C is required. The sintering oven 100 bonds the core outer surface 25 to the insulating layer 50. Instead of a sintering oven 100 a salt bath can be used.

The cable 10 is then passed through an extruder 110 if a jacket 80 is to be extruded onto the cable 10.

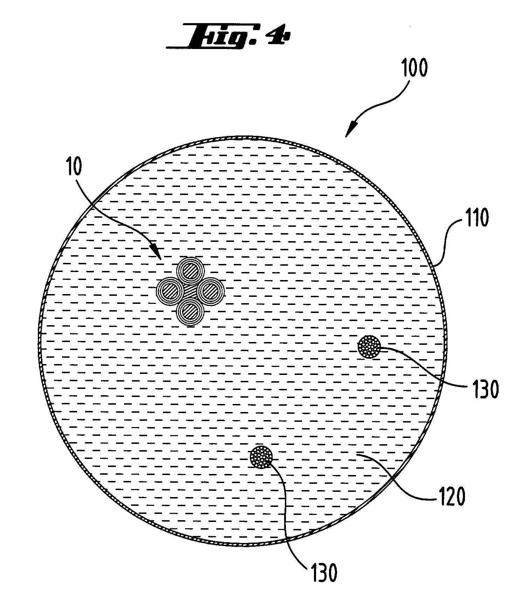

The cable 10 can find one application in so-called streamers. These are used by oil exploration companies to carry out seismographic surveys of the ocean bottom sub surface to search for hydrocarbons. Fig. 4 shows one example of a streamer 100 including a cable 10 manufactured according to this invention. Streamers are known in the art and are made by companies such as Teledyne or Geco-Prakla. The streamer 100 comprises a tube 110 of approximately 7.5 cm diameter having walls made of polyurethane and being approximately 2 mm thick. The streamer 100 is filled with an oil 120 such as Isopar M and further includes power cables 130. Other signal carrying cables such as twisted pairs may be found inside of the streamer 100 but are not shown on this Fig.

### EXAMPLES

### Example 1

This cable 10 has the construction as shown in Fig. 1. The elongate core 20 is made of a 2.0 mm diameter ePTFE core.

Each of the four elongate elements 30 is made of an inner conductor 40 of silver plate copper of size AWG 2019 surrounded by an insulating layer 50 which comprises three layers 50a, 50b, 50c of tapes wrapped about the inner conductor 40. The first tape 50a is made of ePTFE and has a thickness of 10.16 µm. The second tape 50b is wound over the first tape 50a and the third tape 50c is wound over the second tape 50b. The second tape 50b and the third tape 50c are both made of full density PTFE and have a thickness of 101.6 µm and 76.2 pm respectively. The elongate elements 30 have a lay length of 38 mm. Prior to sintering the elongate elements 30 have a nominal outside diameter of 2.23 mm.

The elongate core 20 with the elongate elements 30 is passed at a maximum speed of 1.0 m per minute through the sintering oven 100 at 395°C which results in a dwell time in the oven of around 6 minutes. Subsequent to sintering the elongate elements 30 had a nominal outside diameter of 1.88 mm. The cable 10 has a maximum diameter of 4.6 mm.

### Example 2

This has the same construction and is made in the same way as the cable 10 of Example 1. The elongate elements 30 are made of an inner conductor 40 of size AWG 2219 about which is wrapped a single tape of ePTFE of 0.9 mm thickness. The elongate core 30 is made of ePTFE and has a nominal outside diameter prior to sintering of 0.9 mm.

### Example 3

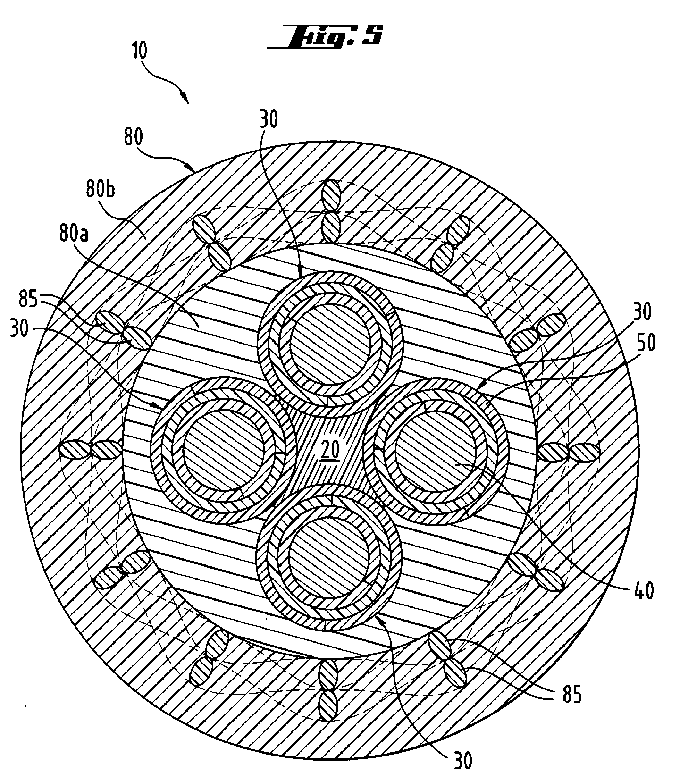

The construction of Example 3 is shown in Fig. 5. The quad cable 10 of Example 1 was provided additionally with a jacket 80. In this example, the jacket 80 comprised an inner jacket 80a and an outer jacket 80b, both of which were made of polyurethane. A braid 85 of a synthetic fiber, for example Technora, impregnated with PTFE was braided about the inner jacket 80a after extrusion of the inner jacket 80a and prior to extrusion of the outer jacket 80b. The braided synthetic fibre acts as a strength member.

### RESULTS

Measurements of the differential impedance, attenuation and weight were made of the cables manufactured and are given in the table below.

| | Example 1 | Example 2 | Example 3 |
|---|---|---|---|
| Impedance (Ω) | 140±7 | 142±5 | 128±5 |
| Attenuation (dB/km) | 45 | <43.3 | <35 |
| Weight (kg/km) | 35±2 | 18.2±0.9 | 88 |

The attenuation measurements were made in air at a frequency of 20 MHz for Examples 1 and 2 and at 10 MHz for Example 3. The impedance measurements were also made in air.

Measurements on Example 2 were also made in 5% NaCI solution (equating to sea water). In this case the impedance was 111±5Ω and the attenuation was less than 54 dB/km. The same measurements were made using streamer fluid and the impedance was then 132±5Ω whilst the attenuation was less than 47 dB/km.

## Claims

1. Cable (10) comprising:
an elongate core (20) made of a first dielectric material and having a core outer surface (25); and
a plurality of elongate conducting elements (30) disposed about the elongate core (20), the elongate conducting elements (30) having an inner conductor (40) surrounded by an insulating layer (50) made of a second dielectric material, and an outer surface divided into a first outer surface area (60) and a second outer surface area (70), wherein the first outer surface area (60) is attached to the core outer surface (25).

2. Cable (10) according to claim 1 wherein the second outer surface area (70) is exposed to the environment.

3. Cable (10) according to claim 1 wherein a jacket is disposed about the plurality of elongate elements (30).

4. Cable (10) according to claim 1 wherein said first dielectric material is selected from the group of polymers consisting of polyethylene, polyester, perfluoralkoxy, fluoroethylene-propylene, polypropylene, polymethylpentene, full density polytetrafluoroethylene or expanded polytetrafluoroethylene.

5. Cable (10) according to claim 4 wherein said first dielectric material is expanded polytetrafluoroethylene.

6. Cable (10) according to claim 1 wherein said second dielectric material is selected from the group of polymers consisting of polyethylene, polyester, perfluoralkoxy, fluoroethylene-propylene, polypropylene, polymethylpentene, full density polytetrafluoroethylene or expanded polytetrafluoroethylene.

7. Cable (10) according to claim 6 wherein said second dielectric material is expanded polytetrafluoroethylene.

8. Cable (10) according to claim 1 wherein the first outer surface area (50) is sintered to the core outer surface (25).

9. Cable (10) according to claim 1 wherein the insulating layer (50) comprises a plurality of insulating layers (50a, 50b, 50c).

10. Cable (10) according to claim 9 wherein an inner one of the plurality of insulating layers (50a, 50b, 50c) is made of expanded PTFE and an outer one of the plurality of insulating layers (50a, 50b, 50c) is made of full density PTFE.

11. Cable (10) according to claim 1 wherein said inner conductor (40) is made from the group of conducting materials selected from copper, nickel-plated copper, tin-plated copper, silver-plated copper, tin-plated alloys, silver-plated alloys or copper alloys.

12. Cable (10) according to claim 11 wherein said inner conductor (40) is made from silver-plated copper.

13. Cable (10) according to claim 1 having four elongate conducting elements (30).

14. Cable (10) according to claim 13 wherein said four elongate conducting elements (30) are equidistantly disposed about the elongate core (20).

15. Cable (10) according to claim 1 wherein said plurality of elongate conducting elements (30) are helically disposed about the elongate core (20).

16. Streamer (100) having a jacket (110) filled with fluid (120) and having a cable (10) disposed within said fluid (120), the cable (10) comprising:
- an elongate core (20) made of a first dielectric material and having a core outer surface (25); and
- a plurality of elongate conducting elements (30) disposed about the elongate core (20),
the elongate conducting elements (30) having an inner conductor (40) surrounded by an insulating layer (50) made of a second dielectric material, and an outer surface divided into a first outer surface area (60) and a second outer surface area (70), wherein the first outer surface area (60) is attached to the core outer surface (25).

17. Streamer (100) according to claim 16 wherein said first dielectric material is selected from the group of polymers consisting of polyethylene, polyester, perfluoralkoxy, fluoroethylene-propylene, polypropylene, polymethylpentene, full density polytetrafluoroethylene or expanded polytetrafluoroethylene.

18. Streamer (100) according to claim 17 wherein said first dielectric material is expanded polytetrafluoroethylene.

19. Streamer (100) according to claim 16 wherein said second dielectric material is selected from the group of polymers consisting of polyethylene, polyester, perfluoralkoxy, fluoroethylene-propylene, polypropylene, polymethylpentene, full density polytetrafluoroethylene or expanded polytetrafluoroethylene.

20. Streamer (100) according to claim 19 wherein said second dielectric material is expanded polytetrafluoroethylene.

21. Streamer (100) according to claim 16 wherein the first outer surface area (50) is sintered to the core outer surface (25).

22. Streamer (100) according to claim 16 wherein the insulating layer (50) comprises a plurality of insulating layers (50a, 50b, 50c).

23. Streamer (100) according to claim 22 wherein an inner one of the plurality of insulating layers (50a, 50b, 50c) is made of expanded PTFE and an outer one of the plurality of insulating layers (50a, 50b, 50c) is made of full density PTFE.

24. Streamer (100) according to claim 16 wherein said inner conductor (40) is made from the group of conducting materials selected from copper, nickel-plated copper, tin-plated copper, silver-plated copper, tin-plated alloys, silver-plated alloys or copper alloys.

25. Streamer (100) according to claim 24 wherein said inner conductor (40) is made from silver-plated copper.

26. Streamer (100) according to claim 16 having four elongate conducting elements (30).

27. Streamer (100) according to claim 16 wherein said four elongate conducting elements (30) are equidistantly disposed about the elongate core (20).

28. Streamer (100) according to claim 16 wherein said plurality of elongate conducting elements (30) are helically disposed about the elongate core (20).

29. Method for the construction of a cable (10) comprising the following steps:
- providing an elongate core (20) made of a first dielectric material,
― disposing about the elongate core (20) a plurality of elongate conducting elements (30) having an insulating layer (50) made of a second dielectric material,
- attaching the plurality of elongate conducting elements (30) to the elongate core (20).

30. Method according to claim 29 wherein the step of attaching the plurality of elongate conducting elements (30) to the elongate core (20) is carried out by heat treatment.

31. Method according to claim 29 wherein the step of attaching the plurality of elongate conducting elements (30) to the elongate core (20) is carried out by placing an adhesive between a core outer surface (35) of the elongate core (20) and a first outer surface area (60) of the plurality of elongate conducting elements (30) and curing the adhesive.

32. Method according to claim 29 wherein the step of attaching the plurality of elongate conducting elements (30) to the elongate core (20) is carried out by sintering a core outer surface (25) of the elongate core (20) to a first outer surface area (60) of the plurality of elongate conducting elements (30).

33. Method according to claim 32 wherein the step of sintering is carried out in a salt bath.

34. Method according to claim 32 wherein the step of sintering is carried out in an oven.

35. Method according to claim 32 wherein the step of sintering is carried out at a temperature between 320°C and 420°C.

36. Method according to claim 35 wherein the step of sintering is carried out at a temperature of approximately 390°C.
